# EUROPÄISCHE PATENTANMELDUNG

(11) **EP 3 885 207 A1**
(43) Veröffentlichungstag der Anmeldung: **29.09.2021**
(21) Anmeldenummer: 20165949.7
(22) Anmeldetag: 26.03.2020
(51) Int. Cl.: B60S 1/56, B08B 7/02, B60S 1/02, G02B 27/00

(54) **REINIGUNGSEINRICHTUNG FÜR EINE SICHTSCHEIBE**

(71) Anmelder: ZKW Group GmbH, 3250 Wieselburg (AT)
(72) Erfinder: Reiter, Thomas, 3325 Ferschitz (AT); Pitterle, Georg, 3241 Kirnberg an der Mank (AT); Jackl, Christian, 3250 Wieselburg (AT)
(74) Vertreter: Patentanwaltskanzlei Matschnig & Forsthuber OG

(57) **Zusammenfassung**

Die Erfindung betrifft eine Reinigungseinrichtung (20) für eine Sichtscheibe (10) insbesondere eines Fahrzeugs, mit einer optisch transparenten Sichtscheibe (10), mit einer hydrophoben sowie Schmutz-abweisenden, optisch transparenten Beschichtung (25), die an einer Außenseite (11) der Sichtscheibe (10) aufgebracht ist, mit zumindest einem Vibrationselement (21), das mit der Sichtscheibe (10) gekoppelt ist, wobei das zumindest eine Vibrationselement (21) von einem Steuergerät (40) aktivierbar ist, sowie mit einer optisch transparenten Antibeschlagvorrichtung (30), die an einer Innenseite (12) der Sichtscheibe (10) angeordnet ist. Weiters wird im Rahmen der Erfindung ein Fahrzeug mit zumindest einer Reinigungseinrichtung (20) angegeben.

## Beschreibung

Die Erfindung betrifft eine Reinigungseinrichtung für eine Sichtscheibe insbesondere eines Fahrzeugs.

Aus dem Stand der Technik sind für Scheinwerfer, insbesondere für Fahrzeugscheinwerfer, bereits unterschiedliche Reinigungseinrichtungen in zahlreichen Ausführungsformen bekannt. Beispielsweise sind bereits seit langem Scheinwerferreinigungsanlagen bekannt, bei denen eine Reinigungsflüssigkeit mittels Hochdruck von außen auf die eine oder die mehreren Abdeckscheiben eines Scheinwerfers gespritzt wird. Insbesondere bei Frontscheinwerfern eines Kraftfahrzeuges können solcherart Verunreinigungen der Abdeckscheibe zuverlässig entfernt werden. Nachteilig an solchen Scheinwerferreinigungsanlagen ist, dass diese aus zahlreichen Bauteilen und Komponenten bestehen, die fehleranfällig und wartungsintensiv sind. Bei solchen Hochdruckwaschanlagen, die meist einen hohen Verbrauch an Waschflüssigkeit haben, werden daher Vorratstanks mit mehreren Litern an Waschflüssigkeit benötigt. Als Waschflüssigkeit wird üblicherweise Wasser mit entsprechenden Zusatzmitteln wie im Sommer mit entsprechendem Insektenlöser oder im Winter mit einem geeigneten Frostschutz verwendet. Die Düsen einer solchen Hochdruckanlage spritzen das Wasser dabei mit Drücken bis zu 50 bar aus beweglichen Düsen von außen auf die Abdeckscheiben der Scheinwerfer. Bei Einsatz von ungeeigneten Zusatzmitteln können die Abdeckscheiben vorzeitig trüb werden, was ein weiterer Nachteil dieser vorbekannten Reinigungsanlagen ist. Bei Fahrzeugen, die mit derartigen Scheinwerferreinigungsanlagen ausgerüstet sind, wird vom Gesetzgeber auch deren Funktionstüchtigkeit überprüft. Fahrzeugbesitzer, die der hohe Wasserverbrauch ihrer Scheinwerferreinigungsanlage stört und diese daher deaktivieren lassen, riskieren damit die Löschung der Betriebserlaubnis ihres Fahrzeugs.

Überdies sind solche Scheinwerferreinigungsanlagen für Frontscheinwerfer aus Sicht des Fußgängerschutzes problematisch, da aufgrund der beweglich gelagerten Hochdruckreinigungsdüsen, die meist im Bereich des vorderen Stoßfängers integriert sind, die Verletzungsgefahr bei einem Zusammenstoß des Fahrzeugs mit einem Fußgänger ansteigt.

Seit langem bekannte Bürsten- oder Wischerreinigungssysteme, die während der Fahrt die Außenseiten der Abdeckscheiben von Scheinwerfern mechanisch reinigen, sind apparativ nochmals um ein Vielfaches aufwendiger und auch wartungsintensiver als die zuvor genannten Scheinwerferreinigungsanlagen mit einer Hochdruckpumpe. Weiters ist bei mechanisch wirkenden Reinigungsanlagen für Abdeckscheiben von Scheinwerfern der Verschleiß der Wischer und/oder Bürsten nach einer bestimmten Betriebsdauer nachteilig.

Bei modernen Kraftfahrzeugen sind zusätzlich zu den eigentlichen Scheinwerfern meist auch zahlreiche optische Geräte wie optische Sensoren, Kameras und Durchsichtdisplays eingebaut. Diese optischen Geräte werden üblicherweise durch Abdeckscheiben vor Witterungseinflüssen bzw. vor Verschmutzungen geschützt. Beispielsweise können optische Sensoren in Scheinwerfersystemen und/oder in Heckleuchtensystemen integriert oder hinter der Windschutzscheibe, der Heckscheibe oder den Seitenscheiben eines Kraftfahrzeugs angeordnet sein.

Um das Sichtfeld (auf Englisch field of view, FOV), also den Bereich im Bildwinkel eines optischen Geräts, eines Sonnensensors, der Bildfläche einer Kamera oder eines Kamera-Aufnahmesensors vor Verunreinigungen, vor Kondensatbeschlag und/oder vor Vereisung frei zu halten, sind die aus dem Stand der Technik vorgenannten, herkömmlichen Scheinwerferreinigungsanlagen jedoch nicht geeignet. Optische Sensoren und Kameras haben deutlich höhere Anforderungen an eine freie Sicht hinsichtlich der Reinigung bzw. Enteisung oder Abtauung solcher Abdeckscheiben, da andernfalls eine zuverlässige Funktionsweise solcher Sensoren und Kameras nicht gewährt werden kann.

Die vorliegende Erfindung bezweckt daher, die aus dem Stand der Technik vorbekannten Nachteile für Reinigungsanlagen für Abdeckscheiben eines Fahrzeugs zu überwinden und dazu eine Reinigungseinrichtung anzugeben, die möglichst kostengünstig und kompakt mit möglichst wenigen Komponenten und Baugruppen konstruiert ist und die möglichst ohne Verschleiß und wartungsfrei eine freie Sicht für sensible optische Geräte und optische Sensoren, die insbesondere in einem Fahrzeug eingebaut sind, gewährleistet. Weiters ist es Aufgabe der Erfindung, eine Reinigungseinrichtung anzugeben, die im Betrieb möglichst ohne Einsatz von Waschflüssigkeit oder von anderen Verbrauchsmitteln auskommt.

Diese Aufgabe wird bei einer Reinigungseinrichtung gemäß dem Oberbegriff des Anspruches 1 mit den Merkmalen des kennzeichnenden Teiles des Anspruchs 1 gelöst.

Die Unteransprüche betreffen weitere vorteilhafte Ausgestaltungen der Erfindung.

Generell wird im Weiteren die Zuordnung der Begriffe hinsichtlich eines Ortes oder einer Orientierung, wie beispielsweise "horizontal", "vertikal", "in horizontaler Richtung", "in vertikaler Richtung", "oben", "unten", "vorne", "darunter", "darüber", "innen", "außen" etc. lediglich zur Vereinfachung gewählt und diese Begriffe beziehen sich möglicherweise auf die Darstellung in den Zeichnungen, nicht jedoch notwendigerweise auf eine aktuelle Gebrauchslage oder Position der Reinigungseinrichtung gemäß der Erfindung, deren Bestandteilen oder eines mit der Reinigungseinrichtung ausgestatteten Fahrzeugs bzw. Kraftfahrzeugs.

Erfindungsgemäß umfasst eine Reinigungseinrichtung für eine Sichtscheibe insbesondere eines Fahrzeugs
- eine optisch transparente Sichtscheibe,
- eine hydrophobe sowie Schmutz-abweisende optisch transparente Beschichtung, die an einer Außenseite der Sichtscheibe aufgebracht ist,
- zumindest ein Vibrationselement, das mit der Sichtscheibe gekoppelt ist, wobei das zumindest eine Vibrationselement von einem Steuergerät aktivierbar ist, sowie
- eine optisch transparente Antibeschlagvorrichtung, die an einer Innenseite der Sichtscheibe angeordnet ist.

Vorteilhaft wirken bei einer erfindungsgemäßen Reinigungseinrichtung zur Reinigung einer Sichtscheibe die folgenden Komponenten effizient zusammen:
(i) die optisch transparente Sichtscheibe, die an ihrer Außenseite eine hydrophobe sowie Schmutz-abweisende optisch transparente Beschichtung aufweist und die dafür sorgt, dass Verschmutzungen in Form von Schmutzpartikeln oder Schmutzwasser aufgrund von minimierter Adhäsion an der beschichteten Außenseite der Sichtscheibe nicht anhaften, sondern die Schmutzpartikel von der Sichtscheibe abperlen;
(ii) das zumindest eine Vibrationselement, welches mit der Sichtscheibe gekoppelt ist und welches von einem Steuergerät aktivierbar ist, sorgt dafür, dass die Sichtscheibe immer dann, wenn sich Verschmutzungen an deren Außenseite abzusetzen beginnen bzw. wenn dies erforderlich ist, in Vibrationen versetzt wird und die Verunreinigungen damit von der Sichtscheibe abgerüttelt werden können;
(iii) eine optisch transparente Antibeschlagvorrichtung, die an der Innenseite der Sichtscheibe angeordnet ist, und die dafür sorgt, dass auch die Innenseite der Sichtscheibe frei von Kondensatniederschlag bleibt.

Vorteilhaft wird durch den Einsatz einer erfindungsgemäßen Reinigungseinrichtung für eine Sichtscheibe ermöglicht, dass eine solcherart ausgerüstete Sichtscheibe besonders hohen Anforderungen als Abdeckung für optische Sensoren oder Kameras insbesondere eines Fahrzeugs genügt.

Mit einer Sichtscheibe, die mit einer Reinigungseinrichtung gemäß der Erfindung ausgerüstet ist, lässt sich das Sichtfeld eines optischen Geräts, beispielsweise eines Sonnensensors, der Bildfläche einer Kamera oder eines Kamera-Aufnahmesensors, zuverlässig vor Verunreinigungen, vor Kondensatbeschlag und/oder vor Vereisung freihalten. Somit kann die zuverlässige Funktionsweise von optischen Sensoren und Kameras, die höhere Anforderungen an eine freie Sicht hinsichtlich der Reinigung bzw. Enteisung oder Abtauung haben, durch den Einsatz einer Sichtscheibe samt der dazugehörigen Reinigungseinrichtung gewährleistet werden.

Je nach Ausführung kann bei einer erfindungsgemäßen Reinigungseinrichtung das zumindest eine Vibrationselement direkt an der Sichtscheibe anliegend befestigt sein oder das Vibrationselement kann auf einem weiteren Element wie etwa einem Gegengewicht angeordnet sein, wobei das darunter liegende Gegengewicht an der Sichtscheibe befestigt ist. Auch in diesem Fall ist das Vibrationselement an der Sichtscheibe befestigt, allerdings mit einer weiteren Lage wie beispielsweise einem Gegengewicht zwischen der Sichtscheibe und dem Vibrationselement.

Weiters kann die Sichtscheibe in einer Trägerblende oder in einer entsprechenden Einfassung befestigt sein, die mit dem zumindest einen Vibrationselement gekoppelt ist. Solcherart kann die Trägerblende oder Einfassung der Sichtscheibe vibriert werden und die Vibrationen des zumindest einen Vibrationselements werden direkt auf die Sichtscheibe übertragen. Die Befestigung des Vibrationselements an der Abdeckscheibe bietet den Vorteil, dass die Schwingungen bzw. Vibrationen lokal in der Abdeckscheibe eingebracht werden und die Reinigung der Abdeckscheibe somit besonders effizient ist.

Das zumindest eine Vibrationselement kann dabei beispielsweise einen Ultraschallschwinger umfassen, der mit Frequenzen im Ultraschallbereich ab 16 kHz die Sichtscheibe direkt oder - im Falle einer mit dem Vibrationselement gekoppelten Trägerblende oder Einfassung der Sichtscheibe - auf indirekte Weise in Vibrationen versetzt und so für ein Abschütteln von Verunreinigungen beispielsweise in Form von Schmutzpartikeln, Wassertröpfchen oder Eisbelag von der Sichtscheibe sorgt.

Als hydrophobe sowie Schmutz-abweisende Beschichtung können beispielsweise sogenannte Nano-Beschichtungen eingesetzt werden, die sich den Lotus-Effekt zu Nutze machen. Schmutz und Oberfläche erfahren hierbei sehr geringe Adhäsionskräfte. Feuchtesowie Schmutzpartikel werden dabei im abperlenden Wasser eingeschlossen und die Verschmutzung perlt einfach von der hydrophoben Beschichtung ab.

Ebenso können kratzfeste, wettergeschützte Beschichtungsmaterialien, die durch UV-Strahlung aushärten und die Schutz für Sichtscheiben beispielsweise aus optisch transparentem Polycarbonat (PC) oder Polymethylmethacrylat (PMMA) gegen Abrieb, chemische Beschädigung, Abtragung bzw. Vergilben durch UV-Strahlung sowie gegen Verschmutzungen bieten, als hydrophobe sowie Schmutz-abweisende Beschichtung an der Außenseite der Sichtscheibe aufgebracht sein. Solche Beschichtungen, die unter anderem als Wetterschutz für Abdeckscheiben dienen, werden auch als Silikon-Hardcoat bezeichnet. Beispielsweise wird ein solches Beschichtungsmaterial, das zum wetterfesten und Schmutz-abweisenden Beschichten von Abdeckscheiben von Fahrzeugscheinwerfern geeignet ist, von Momentive Performance Materials Inc. (www.momentive.com) unter dem Produktnamen SilFORT* UVHC5000 vertrieben.

Vorteilhaft kann bei einer Reinigungseinrichtung gemäß der Erfindung das zumindest eine Vibrationselement an der Sichtscheibe befestigt sein.

Diese Ausführung bietet den Vorteil, dass mit einem oder mit mehreren Vibrationselementen, die direkt an der Sichtscheibe anliegend an dieser befestigt sind, besonders effizient und möglichst verlustfrei Vibrationen an die Sichtscheibe übertragen werden können. Ebenso ist es im Rahmen der Erfindung denkbar, dass zumindest ein Gegengewicht an der Sichtscheibe befestigt ist und das zumindest eine Vibrationselement mit dem Gegengewicht gekoppelt ist. Schwingungen des Vibrationselements, welches mit dem Gegengewicht gekoppelt ist, werden vom Vibrationselement auf das Gegengewicht und von diesem verstärkt direkt auf die Sichtscheibe übertragen. Die vibrierende Wirkung des Vibrationselements wird als Resonanz des damit gekoppelten Gegengewichts verstärkt und somit die Reinigungswirkung der Sichtscheibe weiter verbessert.

Ebenso kann im Rahmen der Erfindung bei einer Reinigungseinrichtung das zumindest eine Vibrationselement in der Sichtscheibe integriert sein.

In dieser Ausführung ist das zumindest eine Vibrationselement besonders effektiv vor Beschädigungen oder Witterungseinflüssen in der Sichtscheibe integriert. Vibrationen des Vibrationselements, die vom Steuergerät aktiviert werden, werden vorteilhaft direkt an Ort und Stelle zur erwünschten Reinigung in die Sichtscheibe eingeleitet. Vibrationsverluste werden somit zuverlässig vermieden. Bei Sichtscheiben beispielsweise aus optisch transparentem Polycarbonat (PC) oder Polymethylmethacrylat (PMMA) können ein oder mehrere Vibrationselemente beispielsweise während des Herstellungsprozesses mittels Insert molding oder Injection molding durch Einlegen des Vibrationselements beim Spritzgussprozess in der Sichtscheibe integriert werden.

In einer weiteren zweckmäßigen Ausführung der Erfindung kann bei einer Reinigungseinrichtung das zumindest eine Vibrationselement mit einer Trägerblende, an der die Sichtscheibe befestigt ist, gekoppelt sein. Unter einer Trägerblende ist eine Einfassung für die Sichtscheibe zu verstehen. Das eine oder auch mehrere Vibrationselemente können dabei mit der Trägerblende gekoppelt oder aber direkt in der Trägerblende integriert sein. Eine solche Trägerblende bzw. Einfassung bietet den Vorteil, dass die Sichtscheibe an ihren Rändern von der Trägerblende geschützt wird und die Vibrationen gleichmäßig in die Sichtscheibe eingeleitet werden. Die Sichtscheibe ist somit auch während des Reinigungsbetriebs, also während des Einleitens von Vibrationen durch das zumindest eine Vibrationselement, möglichst gut vor mechanischen Belastungen geschützt.

Besonders kompakt kann eine Reinigungseinrichtung gemäß der Erfindung gestaltet sein, wenn das zumindest eine Vibrationselement in der Trägerblende der Sichtscheibe integriert ist.

Vorteilhaft kann die Sichtscheibe mit der Trägerblende einstückig verbunden sein und samt der Trägerblende oder zumindest samt einer Einfassung bei Bedarf ausgewechselt bzw. ausgetauscht werden.

In einer weiteren Ausführungsvariante der Erfindung kann bei einer Reinigungseinrichtung das zumindest eine Vibrationselement mit der Sichtscheibe und/oder mit der Trägerblende durch Fügen dauerhaft verbunden sein.

Unter dem Begriff "Fügen" werden gemäß DIN 8593-1 unterschiedliche Fügeverfahren zusammengefasst. Beim Fügen werden zwei oder mehrere feste Körper, die Fügeteile, mit geometrisch bestimmter Gestalt dauerhaft miteinander verbunden bzw. gefügt. Bei manchen Fügeverfahren wird zusätzlich ein "formloser" Hilfsstoff, also ein Stoff, dessen Form nicht definiert ist, eingesetzt. Beispielsweise werden Klebstoffe als ein solcher Hilfsstoff verstanden.

Im gegenständlichen Fall kann das zumindest eine Vibrationselement mit der Sichtscheibe und/oder mit der Trägerblende beispielhaft durch folgende Fügeverfahren dauerhaft verbunden werden:
- durch Verkleben mit Klebstoff;
- durch Verschrauben mit Schrauben direkt durch die Sichtscheibe und/oder mit der Trägerblende, oder in Form einer Schraubhalterung an der Sichtscheibe und/oder der Trägerblende;
- durch formschlüssiges Heißverstemmen. Dabei wird durch thermoplastische Verformung die Sichtscheibe und/oder die Trägerblende zum Halter oder Adapter der Vibrationseinheit;
- durch Bajonettieren des Vibrationselements mit der Sichtscheibe und/oder mit der Trägerblende. Unter dem Begriff des Bajonettierens versteht der Fachmann ein Zusammensetzen bzw. Einrenken als geeignete Kombination und Abfolge aus Schieben und Drehen. Das Einrenken erfolgt meist durch eine lineare (translatorische) und anschließend rotatorische Bewegung. Eine Bajonett-Verbindung hält durch Formschluss, das Öffnen kann durch Überwinden von Haftreibung und/oder Federkraft und/oder dem Umgehen bzw. Öffnen einer Raststufe oder Sperre erfolgen;
- durch eine Spreizverbindung. Beim federnden Einspreizen wird das Fügeteil zunächst elastisch verformt. Nach dem Einlegen oder Einschieben erfolgt die elastische Rückfederung. Beispiele sind Klippverbindungen, Schnappverbindungen, Spreizringe, Blechfedern und Sicherungsringe, die zur Befestigung des zumindest einen Vibrationselements mit der Sichtscheibe und/oder mit der Trägerblende eingesetzt werden können.

Besonders zweckmäßig kann bei einer Reinigungseinrichtung gemäß der Erfindung die optisch transparente Antibeschlagvorrichtung eine Beschlag-hemmende Beschichtung sein, die an der Innenseite der Sichtscheibe aufgebracht ist.

Diese Ausführung bietet den Vorteil, dass die Sichtscheibe nicht nur an ihrer Außenseite vor äußeren Verunreinigungen und Witterungseinflüssen gereinigt werden kann, sondern zusätzlich auch an ihrer Innenseite. Unter der Innenseite ist die der Außenseite gegenüberliegende Seite der Sichtscheibe zu verstehen, die in Einbaulage beispielsweise bei einem Scheinwerfer, insbesondere bei einem Fahrzeugscheinwerfer, zum Gehäuse des Scheinwerfers hin orientiert ist. Um bei feuchtem oder kaltem Wetter unerwünschte Kondensatbildung an der Scheibeninnenseite zu verhindern, ist in dieser Ausführungsform der Erfindung die Innenseite der Sichtscheibe mit einer Beschlag-hemmenden Beschichtung ausgerüstet.

Solche als "Anti-fog" bezeichneten Beschichtungen sind beispielsweise für Abdeckscheiben aus durchsichtigem Polycarbonat (PC) oder Polymethylmethacrylat (PMMA) unter der Bezeichnung MODIPER® H vom Hersteller NOF Corporation (www.nof.co.jp) erhältlich.

In einer vorteilhaften Alternative der Erfindung kann bei einer Reinigungseinrichtung die optisch transparente Antibeschlagvorrichtung ein Heizelement mit einer Heizfolie und/oder mit Heizdrähten umfassen, wobei die Heizfolie und/oder Heizdrähte an der Innenseite der Sichtscheibe befestigt oder zumindest teilweise in die Sichtscheibe integriert ist bzw. sind.

Alternativ oder in Ergänzung zu einer an der Scheibeninnenseite angeordneten, Beschlag-hemmenden Beschichtung können an der Innenseite der Sichtscheibe auch eine Heizfolie und/oder ein Heizelement mit Heizdrähten, die in die Sichtscheibe integriert sind, vorgesehen sein. Derartige elektrische Bauteile können zweckmäßig vom selben Steuergerät, welches zum Aktivieren des zumindest einen Vibrationselements dient, gesteuert und aktiviert werden. Bedarfsweise kann so rasch eine Kondensatbildung an der Scheibeninnenseite der Sichtscheibe verhindert und Beschläge an der Scheibeninnenseite rasch abgetrocknet werden.

In einer Weiterbildung der Erfindung kann bei einer Reinigungseinrichtung an der Außenseite und/oder an der Innenseite der Sichtscheibe eine Antireflex-Beschichtung aufgetragen sein.

Eine Antireflex-Beschichtung, die auch als Antireflex-Coating bezeichnet wird, bietet den Vorteil, dass Transmissionsverluste stark reduziert werden. Zusätzlich können bei Kamerabasierten Anwendungen mit einer entsprechenden, Wellenlängenspezifischen Antireflex-Beschichtung Eigenblendungen durch Lichtmodule möglichst verhindert werden. Die Effizienz der Kamerasensoren wird dadurch erhöht.

Bei Einsatz von Sensortechnologien wie LiDAR (light detection and ranging), FIR (fernes Infrarot, far infrared, langwellige IR-Strahlung von 15 µm bis 1 mm), SWIR (kurzwelliges Infrarot, short wavelength, Wellenlängen von 1,4 µm bis 3 µm) oder NIR (nahes Infrarot, near infrared, bei Wellenlängen von 780 nm bis 1400 nm) kann eine Antireflex-Beschichtung der Sichtscheibe vorteilhaft zur Rauschreduzierung beitragen, wodurch ebenfalls die Effizienz der entsprechenden Sensoren erhöht wird.

Besonders effektiv ist es, wenn sowohl die Innenseite, als auch die Außenseite der Sichtscheibe mit einer Antireflex-Beschichtung ausgerüstet sind.

Besonders vorteilhaft kann sein, wenn bei einer Reinigungseinrichtung gemäß der Erfindung das zumindest eine Vibrationselement ein Ultraschallschwingungen erzeugendes Piezoelement ist.

Piezoelektrische Vibratoren, also resonant betriebene Piezoaktoren, die zur Ultraschallerzeugung bei Frequenzen von 16 kHz bis 200 kHz dienen, bieten den Vorteil einer besonders kompakten Bauweise, was insbesondere beim Einsatz in möglichst klein bauenden Vibrationselementen bzw. in kompakten Vibrationseinheiten, die möglichst unauffällig an der Abdeckscheibe von Scheinwerfern bzw. von Fahrzeugscheinwerfern befestigt sind, von besonderer Bedeutung ist. Aufgrund der kleinen Baugröße solcher Piezoaktoren bzw. piezoelektrischer Vibratoren bieten sich diese auch dazu an, direkt in die Abdeckscheibe integriert zu werden, wodurch die Effizienz der Reinigungseinrichtung - wie vorhin bereits festgehalten - weiter erhöht werden kann.

Besonders effizient kann eine Reinigungseinrichtung gemäß der Erfindung eine Sichtscheibe reinigen, wenn zwei oder mehrere voneinander beabstandete Vibrationselemente mit der Sichtscheibe gekoppelt sind, wobei die zwei oder mehreren Vibrationselemente jeweils von einem Steuergerät aktivierbar sind.

Je nach den örtlichen Gegebenheiten und Anforderungen hinsichtlich der Reinigungsaufgaben können mehrere Vibrationselemente über die Fläche einer Sichtscheibe verteilt angeordnet sein oder aber an voneinander beabstandeten Abschnitten mit der Sichtscheibe gekoppelt sein. Zweckmäßigerweise werden dazu Positionen der Vibrationselemente auf der Sichtscheibe oder entlang dieser ausgewählt, die nicht direkt im optischen Strahlengang eines unter der Sichtscheibe befindlichen Sensors oder einer Kamera angeordnet sind und die damit den Sensor oder die Kamera nicht stören.

Besonders vorteilhaft kann sein, wenn bei einer Reinigungseinrichtung gemäß der Erfindung das Steuergerät mit einer Kamera und/oder mit einem Sensor, vorzugsweise einem optischen Sensor, zusammenwirkt.

Die signalmäßige Koppelung von der Reinigungseinrichtung bzw. von deren Steuergerät mit einer Kamera und/oder einem geeigneten Sensor, die die Verschmutzung der Sichtscheibe erkennen, bietet den Vorteil, dass die Reinigungseinrichtung bedarfsweise selbsttätig aktiviert wird. Beispielsweise kann im Falle eines Kraftfahrzeugs von einer Kamera erkannt werden, ob die aktuellen Witterungsbedingungen beispielsweise während eines Regen- oder Schneefalls eine Reinigung der Sichtscheibe erforderlich machen.

Je nach Einsatzgebiet und Witterung kann es zweckmäßig sein, wenn bei einer Reinigungseinrichtung gemäß der Erfindung die Aktivierung des zumindest einen Vibrationselements vom Steuergerät aus nach einem Aktivierungsschema erfolgt, welches ausgewählt ist aus der Gruppe umfassend: zyklisch wiederkehrende Aktivierung, manuelle Aktivierung, Aktivierung mittels eines Sensorsignals, Aktivierung mittels eines Kamerasignals.

Beispielhaft sind die folgenden Varianten zur Aktivierung des zumindest einen Vibrationselements jeweils vom Steuergerät aus denkbar:
- zyklisch wiederkehrend: in definierten Zeitabständen wird das zumindest eine Vibrationselement aktiviert, unabhängig von den vorhandenen Verhältnissen (Nässe, Verschmutzung, etc.)
- mittels einer manuellen Aktivierung: beispielsweise kann bei einem Fahrzeug die Aktivierung des zumindest einen Vibrationselements der Reinigungseinrichtung in Kombination mit der Aktivierung der Windschutzscheibenreinigung, des "Scheibenwischers", erfolgen. Das Steuergerät erhält dazu ein Signal der Windschutzscheibenreinigung, woraufhin ein Vibrationselement der Reinigungseinrichtung aktiviert wird.
- mittels Regensensor an der Windschutzscheibe oder an der Abdeckscheibe eines Fahrzeugs wird das Vibrationselement aktiviert.
- mittels einer Kamera im Scheinwerfer wird die Verschmutzung der Sichtscheibe erkannt.

Weiters ist im Rahmen der Erfindung vorgesehen, dass das zumindest eine Vibrationselement der Reinigungseinrichtung vom Steuergerät aus bei unterschiedlichen Frequenzen und/oder Amplituden und/oder Zeitintervallen und/oder Zeitdauern aktiviert und betrieben werden kann. Damit können mit der Reinigungseinrichtung unterschiedliche Reinigungsprogramme eingestellt werden, um damit möglichst an die jeweilige individuelle Reinigungsaufgabe angepasst die mit der Reinigungseinrichtung ausgestattete Sichtscheibe möglichst effizient reinigen zu können. Beispielsweise kann es zweckmäßig sein, wenn die Reinigung der Sichtscheibe bei trockener Witterung mit einer beispielhaft größeren Frequenz und Amplitude der Schwingungen des zumindest einen Vibrationselements abläuft als während der Reinigung bei Regenwetter. Bei nasser, feuchter Witterung mit Niederschlag kann es beispielsweise ausreichen, wenn die Reinigung der Sichtscheibe zum Abrütteln von Regentropfen und Nässe mit einer vergleichsweise niedrigeren Frequenz und einer kleineren Amplitude der Schwingungen des einen oder der mehreren Vibrationselemente abläuft als dies bei trockener Witterung zweckmäßig ist.

Besonders vorteilhaft kann sein, wenn bei einer erfindungsgemäßen Reinigungseinrichtung die mit dem zumindest einen Vibrationselement gekoppelte Sichtscheibe austauschbar ist.

Die Sichtscheibe kann beispielsweise als austauschbares Modul in einer Trägerblende oder einer Einfassung befestigt sein und erforderlichenfalls einfach ausgewechselt werden können. Ebenso kann es in einer alternativen Ausführung zweckmäßig sein, wenn die Sichtscheibe samt der Trägerblende oder der Einfassung ein Modul bildet und einfach und kostengünstig ausgewechselt werden kann. Dies bietet auch den Vorteil, dass elektronische Bauteile wie optische Sensoren oder eine Kamera, die beispielsweise in einem Fahrzeug eingebaut und durch eine entsprechende Sichtscheibe nach außen hin vor Witterungseinflüssen geschützt sind, durch Abnehmen der Sichtscheibe einfach von außen zugänglich sind. Die Sichtscheibe alleine oder aber gemeinsam mit einer abnehmbaren Trägerblende oder Einfassung dient somit auch als Revisions- und Wartungsabdeckung für die darunter liegenden optischen Bauteile.

Um einen raschen und sicheren Austausch zu gewährleisten, kann die Sichtscheibe oder die Sichtscheibe gemeinsam mit zumindest einem Abschnitt der Trägerblende beispielsweise mittels Schnellwechselverschluss oder Bajonettverschluss geöffnet und wieder verschlossen werden. Entsprechende Dichtungen sorgen dabei für eine hermetisch wirkende Abdichtung zwischen der Sichtscheibe und ihrer Einfassung bzw. dem umliegenden Gehäuse beispielsweise eines Fahrzeugscheinwerfers, sofern die Sichtscheibe beispielsweise als Abdeckung für optische Bauteile in einem Fahrzeugscheinwerfer integriert ist.

In einer Weiterbildung der Erfindung kann bei einer Reinigungseinrichtung die Sichtscheibe innerhalb einer Abdeckscheibe eines Fahrzeugs angeordnet sein, wobei die Abdeckscheibe ausgewählt ist aus der folgenden Gruppe: Windschutzscheibe, Seitenscheibe, Heckscheibe, Scheinwerferabdeckscheibe, optische Linse.

Die mit der Reinigungseinrichtung versehene Sichtscheibe hat für sich genommen möglichst homogene Eigenschaften und kann ein Modul innerhalb einer größeren Abdeckscheibe bilden. Beispielsweise kann eine solche Sichtscheibe innerhalb einer Windschutzscheibe, Seitenscheibe oder einer Heckscheibe eines Fahrzeugs angeordnet oder in eine solche Scheibe integriert sein. Insbesondere bei Einsatz einer Trägerblende als Einfassung der Sichtscheibe kann diese besonders unauffällig in die umgebende Abdeckscheibe integriert sein. Beispielsweise kann die Sichtscheibe dazu in einem Tönungsstreifen am Rand der jeweiligen Abdeckscheibe, beispielweise der Windschutzscheibe, angeordnet sein.

Ebenso kann die mit der Reinigungseinrichtung versehene Sichtscheibe in einer Scheinwerferabdeckscheibe eines Fahrzeugs oder in einer optischen Linse eines Scheinwerfers integriert sein.

Die vorstehend genannten Vorteile der erfindungsgemäßen Reinigungseinrichtung gelten gleichermaßen auch für einen mit einer Reinigungseinrichtung ausgestatteten Scheinwerfer, insbesondere einen Fahrzeugscheinwerfer. In der vorliegenden Anmeldung wird der Einfachheit halber jeweils von einer Reinigungseinrichtung gesprochen. Selbstredend sind von der Erfindung beispielsweise auch Scheinwerfer umfasst, die mehrere Reinigungseinrichtungen mit jeweils einer Sichtscheibe zur Abdeckung eines besonders empfindlichen optischen Sensors oder einer Kamera aufweisen. Ebenso sind vom Begriff einer Reinigungseinrichtung unterschiedliche Ausführungen mit einer oder auch mit mehreren Vibrationselementen umfasst.

Im Rahmen der Erfindung wird weiters ein Fahrzeug angegeben mit zumindest einer Reinigungseinrichtung.

Die vorgenannten Vorteile und vorteilhaften Wirkungen der Erfindung gelten gleichermaßen auch für ein solches Fahrzeug, das mit einer oder mit mehreren Sichtscheiben mit einer erfindungsgemäßen Reinigungseinrichtung ausgerüstet ist.

Vorteilhaft kann zur Reinigung einer mit einer Reinigungseinrichtung gemäß der Erfindung ausgestatteten Sichtscheibe, die in einem Fahrzeugscheinwerfer angeordnet ist, auf den Einsatz von externer Waschflüssigkeit samt den dazu üblicherweise erforderlichen Flüssigkeitstanks und Apparaturen wie Pumpen, Zuleitungsschläuche und Waschdüsen zum Aufspritzen der Waschflüssigkeit auf die Abdeckscheiben des Fahrzeugscheinwerfers verzichtet werden.

Weitere Einzelheiten, Merkmale und Vorteile der Erfindung ergeben sich aus der nachfolgenden Erläuterung von in den Zeichnungen schematisch dargestellten Ausführungsbeispielen der Erfindung. In den Zeichnungen zeigen:
- - **Fig. 1**: in einer isometrischen Ansicht schräg von vorne einen Fahrzeugscheinwerfer mit einer Sichtscheibe, die mit einer Reinigungseinrichtung gemäß der Erfindung ausgerüstet ist;
- **- Fig. 2**: in einer teilweisen Schnittansicht von der Seite einen Ausschnitt der in Fig. 1 veranschaulichten Sichtscheibe samt der dazugehörigen Reinigungseinrichtung;
- **- Fig. 3**: in einer isometrischen Ansicht schräg von oben das in Fig. 2 markierte Detail A der Sichtscheibe samt der dazugehörigen Reinigungseinrichtung;
- **- Fig. 4**: in einer Schnittansicht von der Seite Details einer Reinigungseinrichtung samt einer in einer Trägerblende befestigten Sichtscheibe;
- **- Fig. 5**: in einer Draufsicht einen Fahrzeugscheinwerfer mit einer Sichtscheibe mit einer Reinigungseinrichtung gemäß der Erfindung, wobei zusätzlich auch mehrere Vibrationselemente zur Reinigung in der Abdeckscheibe integriert sind;
- **- Fig. 6**: in einer isometrischen Ansicht schräg von oben eine an einer Sichtscheibe befestigte Reinigungseinrichtung mit einer Vibrationseinheit, in der ein Vibrationselement integriert ist;
- **- Fig. 7**: in einer teilweisen Schnittansicht von der Seite eine Variante einer Reinigungseinrichtung gemäß der Erfindung samt dem zugehörigen Steuerungssystem, wobei eine Vibrationseinheit in einer Sichtscheibe integriert ist;
- - **Fig. 8**: in einer teilweisen Schnittansicht von der Seite eine alternative Variante einer Reinigungseinrichtung gemäß der Erfindung samt dem zugehörigen Steuerungssystem.

### Im Folgenden nun die detaillierte Figurenbeschreibung:

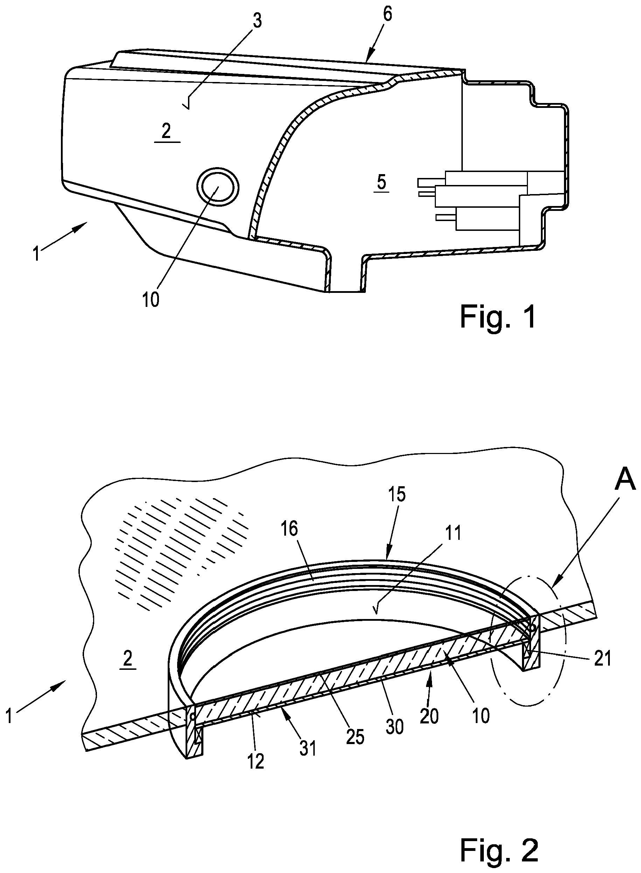

**Fig. 1** zeigt einen Fahrzeugscheinwerfer 1 mit einer Abdeckscheibe 2, in die eine Sichtscheibe 10, die mit einer Reinigungseinrichtung gemäß der Erfindung ausgerüstet ist, integriert ist. Der hier dargestellte Fahrzeugscheinwerfer 1 umfasst eine Abdeckscheibe 2, die beispielsweise aus durchsichtigem Polycarbonat (PC) oder Polymethylmethacrylat (PMMA) hergestellt ist. Die Abdeckscheibe 2 weist eine Außenseite 3 auf. Die Außenseite 3 der Abdeckscheibe 2 ist in Einbaulage des Fahrzeugscheinwerfers 1 Umwelteinflüssen ausgesetzt. Die Innenseite 4 der Abdeckscheibe 2 ist in Einbaulage zu einem Innenraum 5 des Fahrzeugscheinwerfers 1 orientiert, der von einem Gehäuse 6 sowie von der Abdeckscheibe 2 gebildet wird.

**Fig. 2** zeigt einen Ausschnitt der in Fig. 1 veranschaulichten Sichtscheibe 10 samt einer dazugehörigen Reinigungseinrichtung 20.

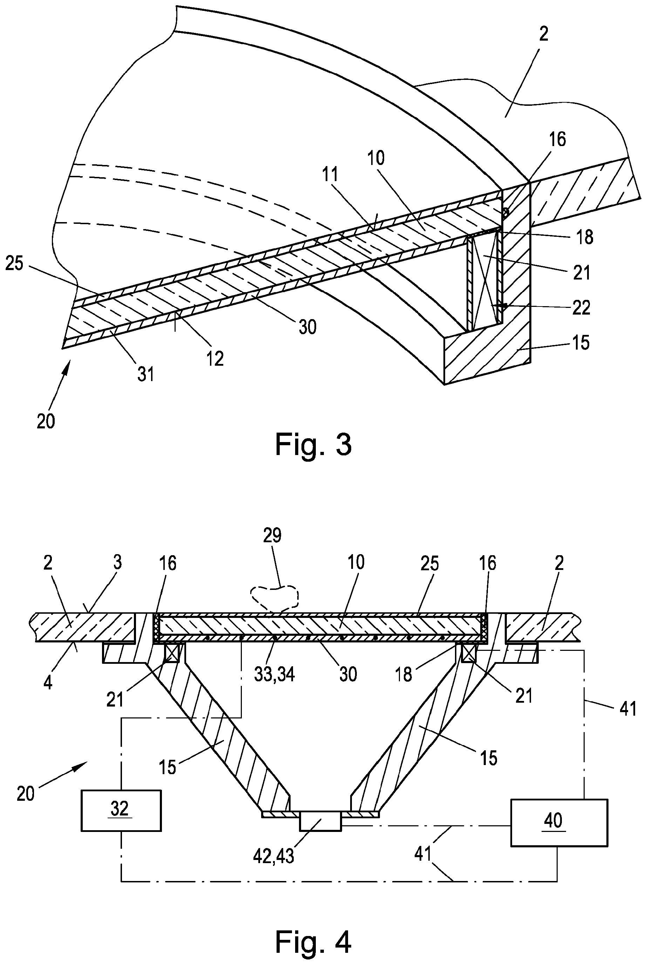

**Fig. 3** stellt das in Fig. 2 markierte Detail A der Sichtscheibe 10 samt der dazugehörigen Reinigungseinrichtung 20 dar. Die folgende Figurenbeschreibung bezieht sich gleichermaßen auf die beiden Figuren 2 und 3.

Die Reinigungseinrichtung 20 gemäß der Erfindung für eine Sichtscheibe 10, die hier beispielsweise in einem Fahrzeugscheinwerfer 1 integriert ist, umfasst neben der optisch transparenten Sichtscheibe 10 zumindest ein Vibrationselement 21, das mit der Sichtscheibe 10 gekoppelt ist. Das Vibrationselement 21 ist hier zweckmäßig in einer Trägerblende 15, die als Einfassung der Sichtscheibe 10 dient, eingebaut bzw. in diese integriert.

Die Sichtscheibe 10 ist hier beispielsweise aus Polymethylmethacrylat (PMMA) hergestellt und weist eine Außenseite 11 sowie eine Innenseite 12 auf. An ihrer Außenseite 11 ist die Sichtscheibe 10 mit einer hydrophoben sowie Schmutz-abweisenden Beschichtung 25 ausgerüstet. Als außenseitige Schmutz-abweisende Beschichtung 25, die als Wetterschutz für die Sichtscheibe 10 dient, und die wasserabweisend (hydrophob) sowie auch fettabweisend (oleophob) ausgerüstet ist, wird hier eine Silikon-Hardcoat Beschichtung verwendet. Die Beschichtungsstärke dieser Silikon-Hardcoat Beschichtung beträgt beispielsweise von 8 µm bis 12 µm.

An der Innenseite 12 der Sichtscheibe 10 ist eine Antibeschlagvorrichtung 30 beispielsweise in Form einer Beschlag-hemmenden Beschichtung 31 angebracht. Die Sichtscheibe 10 kann beispielsweise an ihrem Umfang ein Schraubgewinde aufweisen und kann in der Trägerblende 15 einschraubbar befestigt werden. In der hier gezeigten Ausführung ist die Sichtscheibe 10 mit einem Klebefilm 18 an der Trägerblende 15 bzw. am Vibrationselement 21 festgeklebt. Eine zwischenliegende Dichtung 16 zwischen der Sichtscheibe 10 und der Einfassung der Trägerblende 15 verhindert das unerwünschte Eindringen von Feuchte in den durch die Sichtscheibe 10 geschützten Innenraum des Fahrzeugscheinwerfers. Eine unerwünschte Kondensatbildung an der Innenseite 12 der Sichtscheibe 10 wird dadurch möglichst unterbunden.

Ein in Umfangrichtung der Sichtscheibe 10 umlaufend angeordnetes Vibrationselement 21 ist von einem hier nicht explizit gezeigten Steuergerät aus aktivierbar. Das Vibrationselement 21 ist beispielsweise als Piezoelement 22 bzw. als piezoelektrischer Vibrator 22 ausgeführt. Der piezoelektrische Vibrator 22 ist ein resonant betriebener Piezoaktor, der zur Ultraschallerzeugung bei Frequenzen von 16 kHz bis 200 kHz dient. Der piezoelektrische Vibrator 22 ist hier in dieser Ausführung in einer ringförmigen Kerbe der Trägerblende 15 befestigt. Mittels Klebstoff 18 oder Klebefolien 18 ist das Vibrationselement 21 an der Innenseite 12 der Sichtscheibe 10 angeklebt. Die Integration des Vibrationselements 21 innerhalb der Trägerblende 15 bietet den Vorteil einer geschlossenen, gekapselten Bauweise. Das Vibrationselement 21 muss nur mehr elektrisch mit einem entsprechenden Steuergerät kontaktiert werden, um vom Steuergerät aus aktiviert werden zu können.

Die Trägerblende 15 ist samt der Sichtscheibe 10 und dem in der Trägerblende 15 integrierten Vibrationselement 21 als Wechselmodul ausgeführt und kann bedarfsweise einfach und kostengünstig ausgewechselt werden.

**Fig. 4** zeigt von der Seite Details einer Reinigungseinrichtung 20 samt einer in einer Trägerblende 15 befestigten Sichtscheibe 10. Die hier gezeigte Anordnung entspricht im Wesentlichen der vorigen Beschreibung zu den Figuren 2 und 3.

Die Sichtscheibe 10 ist hier beispielsweise aus Polymethylmethacrylat (PMMA) hergestellt und weist eine Außenseite 11 sowie eine Innenseite 12 auf. An ihrer Außenseite 11 ist die Sichtscheibe 10 mit einer hydrophoben sowie Schmutz-abweisenden Beschichtung 25 in Form einer Silikon-Hardcoat Beschichtung ausgerüstet.

An der Innenseite 12 der Sichtscheibe 10 ist eine Antibeschlagvorrichtung 30 hier in Form einer Heizfolie 34 mit Heizdrähten 33 angebracht. Die Antibeschlagvorrichtung 30 wird mittels eines Heizelements 32 geregelt, wobei das Heizelement 32 von einem zentralen Steuergerät 40 aus mittels entsprechender Signalleitungen 41 angesteuert wird.

Die Sichtscheibe 10 ist mit einem Klebefilm 18 an der Trägerblende 15 bzw. am Vibrationselement 21 festgeklebt. Eine zwischenliegende Dichtung 16 zwischen der Sichtscheibe 10 und der Einfassung der Trägerblende 15 verhindert das unerwünschte Eindringen von Feuchte in den durch die Sichtscheibe 10 geschützten Innenraum, in dem sich beispielsweise ein Fotosensor 42 oder eine Kamera 43 befindet. Eine unerwünschte Kondensatbildung an der Innenseite 12 der Sichtscheibe 10 wird dadurch möglichst unterbunden.

Ein in Umfangrichtung der Sichtscheibe 10 umlaufend angeordnetes Vibrationselement 21 ist von dem Steuergerät 40 aus aktivierbar. Das Vibrationselement 21 ist beispielsweise als Piezoelement 22 bzw. als piezoelektrischer Vibrator 22 ausgeführt. Das Steuergerät 40 ist dazu mittels Signalleitungen 41 mit dem Vibrationselement 21 verbunden. Mit dem Fotosensor 42 oder der Kamera 43 werden Verunreinigungen 29 beispielsweise in Form von Verschmutzungen oder Regentropfen an der Außenseite der Sichtscheibe 10 erkannt. Die Aktivierung des Vibrationselements 21 erfolgt somit durch das Steuergerät 40 nach Erhalt eines Signals der Kamera 43 oder des Fotosensors 42. Der Sensor 42 kann beispielsweise auch redundant zur Kontrolle der Funktionstüchtigkeit des Vibrationselements 21 bzw. der Kamera 43 dienen.

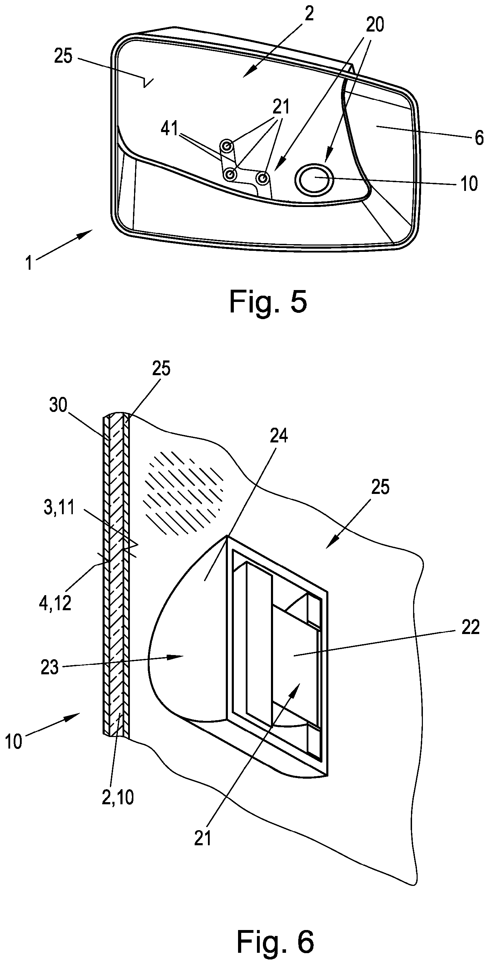

**Fig. 5** zeigt einen Fahrzeugscheinwerfer 1 mit einer Sichtscheibe 10 mit einer Reinigungseinrichtung 20 gemäß der Erfindung, wobei die Sichtscheibe 10 innerhalb der Abdeckscheibe 2 angeordnet ist. Zusätzlich sind in dieser Ausführung auch mehrere Vibrationselemente 21 zur Reinigung in der Abdeckscheibe 2 integriert. Die Abdeckscheibe 2 ist hier ebenfalls an ihrer Außenseite 3 mit einer hydrophoben, Schmutz-abweisenden Beschichtung 25 versehen. An der Innenseite 4 weist die Abdeckscheibe 2 eine Beschlag-hemmende Beschichtung 31 auf. Die einzelnen Vibrationselemente 21 sind mit Signalleitungen 41 mit einem nicht explizit dargestellten Steuergerät verbunden und können gemeinsam vom Steuergerät aus aktiviert werden. Somit kann hier vorteilhaft nicht nur die Sichtscheibe 10 mit der dafür vorgesehenen Reinigungseinrichtung 20 besonders gründlich gereinigt werden, um die Funktionstüchtigkeit eines dahinter bzw. darunter liegenden empfindlichen optischen Sensors oder einer Kamera zu gewährleisten. Zusätzlich kann auch die Abdeckscheibe 2 des Fahrzeugscheinwerfers 1, welche die Sichtscheibe 10 umgibt und die in an sich bekannter Weise die darunter liegenden Leuchtmittel und optischen Bauelemente wie Reflektoren oder Linsen des Scheinwerfers schützt, durch eine Reinigungseinrichtung 20 gereinigt werden. Zweckmäßig können die Vibrationselemente 21 zur Reinigung sowohl der Sichtscheibe 10, als auch der Abdeckscheibe 2, von einem zentralen Steuergerät aus gesteuert werden. Die Sichtscheibe 10 weist an ihrer Innenseite 12 eine Antibeschlagvorrichtung mit einem Heizelement sowie einer Heizfolie auf. Diese Antibeschlagvorrichtung kann ebenfalls vom zentralen Steuergerät aus geregelt und gesteuert werden.

**Fig. 6** zeigt eine an einer Sichtscheibe 10 befestigte Reinigungseinrichtung 20 mit einer Vibrationseinheit 23, in der innerhalb eines Gehäuses 24 ein Vibrationselement 21 integriert ist. Die Vibrationseinheit 23 ist mittels eine Klebeschicht 18 an der Innenseite 12 der Sichtscheibe 10 angeklebt. Das Vibrationselement 21 in Form eines Piezoelements 12 ist hier mit dem Gegengewicht verbunden. Sowohl das Gegengewicht, als auch das Vibrationselement 21 grenzen innerhalb des Gehäuses 24 direkt an die Sichtscheibe 10 an. Vibrationen der Vibrationseinheit 23 werden somit besonders effizient direkt und unmittelbar in die Sichtscheibe 10 eingeleitet. Verschmutzungen, die an der mit einer hydrophoben Beschichtung 25 versehenen Außenseite 11 der Sichtscheibe 10 anliegen, können somit bei Bedarf besonders wirksam mittels der resonanten Schwingungen des piezoelektrischen Vibrators 22 abgerüttelt werden.

Ebenso können auch an einer Abdeckscheibe 2 eines Fahrzeugscheinwerfers 1 solche Vibrationseinheiten 23 zur Reinigung angeordnet sein, wie beispielsweise in Fig. 5 veranschaulicht ist. In diesem Fall ist die Vibrationseinheit 23 mittels eine Klebeschicht 18 an der Innenseite 4 der Abdeckscheibe 2 angeklebt.

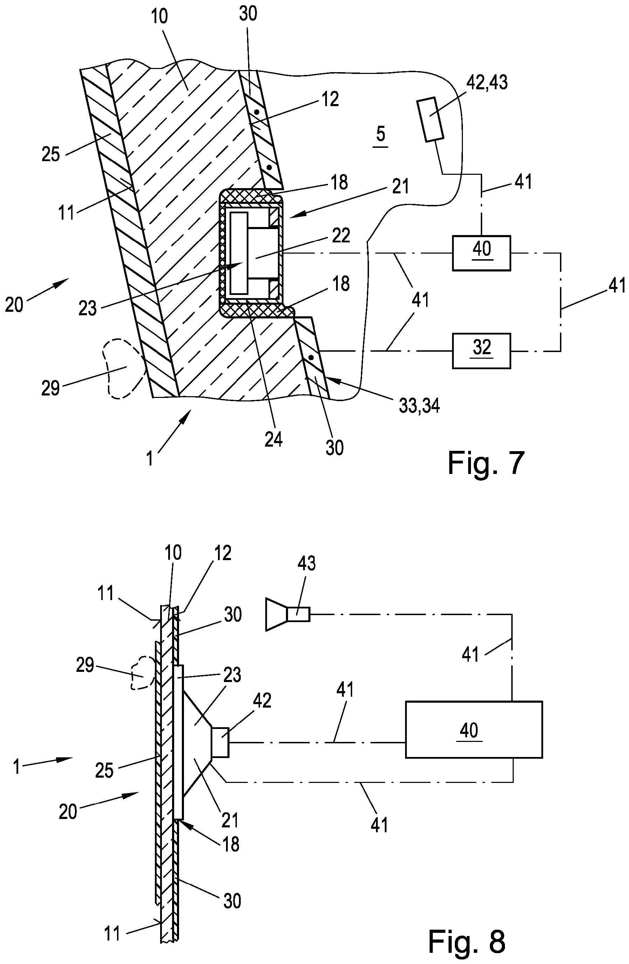

**Fig. 7** zeigt eine Variante einer Reinigungseinrichtung 20 gemäß der Erfindung samt dem zugehörigen Steuerungssystem, wobei eine Vibrationseinheit 21 in einer Sichtscheibe 10 integriert ist. Die Vibrationseinheit 21 ist hier in einer Vertiefung in der Sichtscheibe 10 eingebettet. Die Kavität wurde anschließend nach dem Einbetten der Vibrationseinheit 21 mit einem glasklar aushärtenden Kleber 18 ausgefüllt.

Hinter der Sichtscheibe 10 befindet sich ein geschützter Innenraum 5 eines Fahrzeugscheinwerfers 1, in dem sich beispielsweise ein Fotosensor 42 oder eine Kamera 43 befindet.

Das in der Sichtscheibe 10 integrierte Vibrationselement 21 ist von einem Steuergerät 40 aus aktivierbar. Das Vibrationselement 21 ist beispielsweise als Piezoelement 22 bzw. als piezoelektrischer Vibrator 22 ausgeführt. Das Steuergerät 40 ist dazu mittels Signalleitungen 41 mit dem Vibrationselement 21 verbunden. Mit dem Fotosensor 42 oder der Kamera 43 werden Verunreinigungen 29 beispielsweise in Form von Verschmutzungen oder Regentropfen an der Außenseite der Sichtscheibe 10 erkannt. Die Aktivierung des Vibrationselements 21 erfolgt somit durch das Steuergerät 40 nach Erhalt eines Signals der Kamera 43 oder des Fotosensors 42. Der Sensor 42 kann beispielsweise auch redundant zur Kontrolle der Funktionstüchtigkeit des Vibrationselements 21 bzw. der Kamera 43 dienen.

An der Innenseite 12 der Sichtscheibe 10 ist eine Antibeschlagvorrichtung 30 hier in Form einer Heizfolie 34 mit Heizdrähten 33 angebracht. Die Antibeschlagvorrichtung 30 wird mittels eines Heizelements 32 geregelt, wobei das Heizelement 32 ebenfalls vom zentralen Steuergerät 40 aus mittels entsprechender Signalleitungen 41 angesteuert wird.

**Fig. 8** zeigt eine weitere, alternative Variante einer Reinigungseinrichtung 20 gemäß der Erfindung samt dem zugehörigen Steuerungssystem.

In dieser Ausführung wird ein Detail eines Kraftfahrzeugscheinwerfers 1 gezeigt, wobei die Sichtscheibe 10 mit einer außenseitig 11 angeordneten, hydrophoben sowie Schmutz-abweisenden Beschichtung 25 ausgerüstet ist. An der Innenseite 12 der Sichtscheibe 10 ist hier eine Vibrationseinheit 23 mit einem Vibrationselement 21 mittels einer Klebeschicht 18 befestigt. Die Innenseite 12 ist weiters mit einer Antibeschlagvorrichtung 30 beispielsweise in Form einer Beschlag-hemmenden Beschichtung vor unerwünschter Kondensatbildung geschützt. Ein Steuergerät 40 dient zur Aktivierung des Vibrationselements 21. Das Steuergerät 40 ist dazu mittels Signalleitungen 41 mit dem Vibrationselement 21 bzw. mit einem mit dem Vibrationselement 21 gekoppelten Bewegungssensor 42 verbunden. Mittels einer Kamera 43, die im Innenraum 5 des Scheinwerfers 1 angeordnet ist und die ebenfalls mit einer Signalleitung 41 mit dem Steuergerät 40 verbunden ist, werden Verunreinigungen 29 beispielsweise in Form von Verschmutzungen oder Regentropfen an der Sichtscheibe 10 erkannt. Die Aktivierung des Vibrationselements 21 erfolgt somit durch das Steuergerät 40 nach Erhalt eines Signals der Kamera 43. Der Bewegungssensor 42 dient hier zur Kontrolle der Funktionstüchtigkeit des Vibrationselements 21.

Alternativ oder in Ergänzung zu einer Kamera 43 können auch ein oder mehrere Sensoren 42, beispielsweise optischen Sensoren oder Feuchtigkeitssensoren, zur Aktivierung des zumindest einen Vibrationselements 21 dienen. Derartige Sensoren 42, beispielsweise Regensensoren, können dazu direkt an der Sichtscheibe 10 oder einer hier nicht dargestellten Abdeckscheibe befestigt sein oder sind in diese integriert. Eine Kamera 43, die im Innenraum 5 des Fahrzeugscheinwerfers 1 positioniert ist und deren Empfindlichkeit programmiert werden kann, ab wann eine Verschmutzung als solche erkannt und ein entsprechendes Kamerasignal an das Steuergerät 40 ausgesendet wird, bietet den Vorteil, dass sie bei lokal auftretender Verschmutzung 29 funktionsfähig bleibt. Ein einzelner kleiner Sensor, der an der Abdeckscheibe des Scheinwerfers befestigt ist, kann durch lokal auftretende, starke Verschmutzungen 29 an der Abdeckscheibe maskiert werden und funktioniert dann unter Umständen nicht. Aus diesem Grund ist es zweckmäßig, bei einer Aktivierung der Reinigungseinrichtung 20 mittels Sensoren 42 und ohne Einsatz einer Kamera eine redundante, möglichst ausfallsichere Aktivierung der Reinigungseinrichtung 20 vorzusehen.

Dies kann erzielt werden, indem beispielsweise mehrere Sensoren 42 an unterschiedlichen Stellen der Sichtscheibe 10 und/oder der Abdeckscheibe des Scheinwerfers positioniert sind. Für den Fall, dass ein einzelner Sensor 42, insbesondere ein optischer Sensor, aufgrund von lokaler Verschmutzung temporär nicht funktioniert, so kann von den weiteren, parallel geschalteten Sensoren 42 dennoch das Vibrationselement 21 der Reinigungseinrichtung 10 für die Sichtscheibe 20 mittels des Steuergeräts 40 aktiviert werden.

### LISTE DER BEZUGSZEICHEN

- 1: Fahrzeugscheinwerfer
- 2: Abdeckscheibe
- 3: Außenseite der Abdeckscheibe
- 4: Innenseite der Abdeckscheibe
- 5: Innenraum des Fahrzeugscheinwerfers
- 6: Gehäuse des Fahrzeugscheinwerfers
- 10: Sichtscheibe
- 11: Außenseite der Sichtscheibe
- 12: Innenseite der Sichtscheibe
- 15: Trägerblende, Einfassung der Sichtscheibe
- 16: Dichtung
- 18: Klebstoff, Klebefilm
- 20: Reinigungseinrichtung
- 21: Vibrationselement
- 22: Piezoelement
- 23: Vibrationseinheit
- 24: Gehäuse der Vibrationseinheit
- 25: hydrophobe Beschichtung
- 29: Verunreinigung
- 30: Antibeschlagvorrichtung
- 31: Beschlag-hemmende Beschichtung
- 32: Heizelement
- 33: Heizdraht
- 34: Heizfolie
- 40: Steuergerät
- 41: Signalleitung
- 42: Sensor
- 43: Kamera

## Patentansprüche

1. Reinigungseinrichtung (20) für eine Sichtscheibe (10) insbesondere eines Fahrzeugs, **umfassend**
- eine optisch transparente Sichtscheibe (10),
- eine hydrophobe sowie Schmutz-abweisende, optisch transparente Beschichtung (25), die an einer Außenseite (11) der Sichtscheibe (10) aufgebracht ist,
- zumindest ein Vibrationselement (21), das mit der Sichtscheibe (10) gekoppelt ist, wobei das zumindest eine Vibrationselement (21) von einem Steuergerät (40) aktivierbar ist, sowie
- eine optisch transparente Antibeschlagvorrichtung (30), die an einer Innenseite (12) der Sichtscheibe (10) angeordnet ist.

2. Reinigungseinrichtung (20) nach Anspruch 1, **dadurch gekennzeichnet, dass** das zumindest eine Vibrationselement (21) an der Sichtscheibe (10) befestigt ist.

3. Reinigungseinrichtung (20) nach Anspruch 1 oder 2, **dadurch gekennzeichnet, dass** das zumindest eine Vibrationselement (21) mit einer Trägerblende (15), an der die Sichtscheibe (10) befestigt ist, gekoppelt ist.

4. Reinigungseinrichtung (20) nach Anspruch 3, **dadurch gekennzeichnet, dass** das zumindest eine Vibrationselement (21) in der Trägerblende (15) integriert ist.

5. Reinigungseinrichtung (20) nach einem der Ansprüche 1 bis 4, **dadurch gekennzeichnet, dass** das zumindest eine Vibrationselement (21) mit der Sichtscheibe (10) und/oder mit der Trägerblende (15) durch Fügen dauerhaft verbunden ist.

6. Reinigungseinrichtung (20) nach einem der Ansprüche 1 bis 5, **dadurch gekennzeichnet, dass** die optisch transparente Antibeschlagvorrichtung (30) eine Beschlag-hemmende Beschichtung (31) ist, die an der Innenseite (12) der Sichtscheibe (10) aufgebracht ist.

7. Reinigungseinrichtung (20) nach einem der Ansprüche 1 bis 6, **dadurch gekennzeichnet, dass** die optisch transparente Antibeschlagvorrichtung (30) ein Heizelement (32) mit einer Heizfolie (34) und/oder Heizdrähten (33) umfasst, wobei die Heizfolie (34) und/oder Heizdrähte (33) an der Innenseite (12) der Sichtscheibe (10) befestigt oder zumindest teilweise in die Sichtscheibe (10) integriert ist bzw. sind.

8. Reinigungseinrichtung (20) nach einem der Ansprüche 1 bis 7, **dadurch gekennzeichnet, dass** an der Außenseite (11) und/oder an der Innenseite (12) der Sichtscheibe (10) eine Antireflex-Beschichtung aufgetragen ist.

9. Reinigungseinrichtung (20) nach einem der Ansprüche 1 bis 8, **dadurch gekennzeichnet, dass** das zumindest eine Vibrationselement (21) ein Ultraschallschwingungen erzeugendes Piezoelement (22) ist.

10. Reinigungseinrichtung (20) nach einem der Ansprüche 1 bis 9, **dadurch gekennzeichnet, dass** zwei oder mehrere voneinander beabstandete Vibrationselemente (21) mit der Sichtscheibe (10) gekoppelt sind, wobei die zwei oder mehreren Vibrationselemente (21) jeweils von einem Steuergerät (40) aktivierbar sind.

11. Reinigungseinrichtung (20) nach einem der Ansprüche 1 bis 10, **dadurch gekennzeichnet, dass** das Steuergerät (40) mit einer Kamera (43) und/oder mit einem Sensor (42), vorzugsweise einem optischen Sensor, zusammenwirkt.

12. Reinigungseinrichtung (20) nach einem der Ansprüche 1 bis 11, **dadurch gekennzeichnet, dass** die Aktivierung des zumindest einen Vibrationselements (21) vom Steuergerät (40) aus erfolgt nach einem Aktivierungsschema, welches ausgewählt ist aus der Gruppe umfassend: zyklisch wiederkehrende Aktivierung, manuelle Aktivierung, Aktivierung mittels eines Sensorsignals, Aktivierung mittels eines Kamerasignals.

13. Reinigungseinrichtung (20) nach einem der Ansprüche 1 bis 12, **dadurch gekennzeichnet, dass** die mit dem zumindest einen Vibrationselement (21) gekoppelte Sichtscheibe (10) austauschbar ist.

14. Reinigungseinrichtung (20) nach einem der Ansprüche 1 bis 13, **dadurch gekennzeichnet, dass** die Sichtscheibe (10) innerhalb einer Abdeckscheibe eines Fahrzeugs angeordnet ist, wobei die Abdeckscheibe ausgewählt ist aus der folgenden Gruppe: Windschutzscheibe, Seitenscheibe, Heckscheibe, Scheinwerferabdeckscheibe (2), optische Linse.

15. Fahrzeug mit zumindest einer Reinigungseinrichtung (20) nach einem der Ansprüche 1 bis 14.
